# EUROPÄISCHE PATENTANMELDUNG

(11) **EP 1 026 026 A1**
(43) Veröffentlichungstag der Anmeldung: **09.08.2000**
(21) Anmeldenummer: 00101191.5
(22) Anmeldetag: 21.01.2000
(51) Int. Cl.: B60M 1/28

(54) **Fahrdrahtrichtvorrichtung**

(30) Priorität: 03.02.1999 DE 19904342
(71) Anmelder: SIEMENS AKTIENGESELLSCHAFT, 80333 München (DE)
(72) Erfinder: Henniges, Rolf, Dipl.-Ing., 14554 Seddiner See (DE); Puschmann, Rainer, Dipl.-Ing., 91338 Igensdorf (DE)

(57) **Zusammenfassung**

Eine Fahrdrahtrichtvorrichtung, die eine schnelle und sichere Glättung einer im Fahrdraht vorhandenen Knickung ermöglicht, umfaßt einen Grundkörper (1), an dem an einer seiner beiden Längsseiten wenigstens zwei äußere Fahrdrahtführungsrollen (2, 3) und wenigstens eine mittlere Fahrdrahtführungsrolle (4) um ihre Achsen (21, 31, 41) drehbar gehalten sind, wobei die beiden äußeren Fahrdrahtführungsrollen (2, 3) auf radial gleicher Höhe und die mittlere Fahrdrahtführungsrolle (4) zwischen den beiden äußeren Fahrdrahtführungsrollen (2, 3) angeordnet sind, und wobei wenigstens eine der Fahrdrahtführungsrollen 2, 3, 4) in ihrer relativen radialen Höhenlage gegenüber den anderen Fahrdrahtführungsrollen 2, 3, 4) verstellbar und fixierbar ist.

## Beschreibung

Die Erfindung betrifft eine Fahrdrahtrichtvorrichtung.

Das Zusammenwirken von Fahrdraht und Stromabnehmer ist wesentlich von der Beschaffenheit des Fahrdrahtes abhängig. So führt eine senkrechte Knickung im Fahrdraht, die z. B. bei unsachgemäßer Montage auftreten kann, zu einem unerwünschten Springen der Schleifleiste des Stromabnehmers an dieser Stelle des Fahrdrahtes. Das Springen der Schleifleiste führt zu einer unerwünschten Funkenbildung und damit zu einer erhöhten Abnutzung sowohl des Fahrdrahtspiegels (Fläche, an welcher die Schleifleiste entlanggleitet) als auch der Schleifleiste. Eine senkrechte Knickung des Fahrdrahtes erfordert also entweder ein Auswechseln des geknickten Fahrdraht-Teilstückes oder ein Nacharbeiten der geknickten Stelle. Das Nacharbeiten der senkrechten Knickung im Fahrdraht ist nur bei einer kleineren Knickung möglich. Um eine derartige Knickung zu beseitigen, wird ein erstes Hartholzstück auf den Knick im Fahrdraht gehalten und ein zweites Hartholzstück darunter. Anschließend wird mit einem Hammer so lange auf das auf dem Knick aufgesetzte Hartholzstück geschlagen, bis die Knickung zumindest nahezu beseitigt ist. Aufgrund der beim Glätten des Fahrdrahtes auftretenden Ungenauigkeiten reduziert sich die Lebensdauer des Fahrdrahtes auf etwa 70 %.

Aufgabe der vorliegenden Erfindung ist es deshalb, eine Fahrdrahtrichtvorrichtung zu schaffen, die eine schnelle und sichere Glättung einer im Fahrdraht vorhandenen Knickung ermöglicht.

Die Aufgabe wird erfindungsgemäß durch die Merkmale im Anspruch 1 gelöst. Vorteilhafte Ausgestaltungen der Erfindung sind in den weiteren Ansprüchen beschrieben.

Die erfindungsgemäße Fahrdrahtrichtvorrichtung umfaßt folgende Merkmale:
- Einen Grundkörper, an dem an einer seiner beiden Längsseiten wenigstens zwei äußere Fahrdrahtführungsrollen und wenigstens eine mittlere Fahrdrahtführungsrolle um ihre Achsen drehbar gehalten sind, wobei
- die beiden äußeren Fahrdrahtführungsrollen auf radial gleicher Höhe und die mittlere Fahrdrahtführungsrolle zwischen den beiden äußeren Fahrdrahtführungsrollen angeordnet sind, und wobei
- wenigstens eine der Fahrdrahtführungsrollen in ihrer relativen radialen Höhenlage gegenüber den anderen Fahrdrahtführungsrollen verstellbar und fixierbar ist.

Im Rahmen der Erfindung können z. B. die äußeren Fahrdrahtführungsrollen sowohl radial höher als auch radial tiefer gegenüber der mittleren Fahrdrahtführungsrolle angeordnet sein. Weiterhin erlaubt die Erfindung, daß die beiden äußeren Fahrdrahtführungsrollen in ihrer relativen radialen Höhenlage gegenüber der mittleren Fahrdrahtführungsrolle verstellbar und fixierbar (arretierbar) sind. Ferner umfaßt die Erfindung auch eine radiale Höhenverstellbarkeit sowohl der mittleren Fahrdrahtführungsrolle als auch der beiden äußeren Fahrdrahtführungsrollen.

Als besonders vorteilhaft hat sich jedoch eine Ausführungsform gemäß Anspruch 2 erwiesen, bei welcher die mittlere Fahrdrahtführungsrolle radial tiefer als die beiden äußeren Fahrdrahtführungsrollen angeordnet ist und bei welcher die mittlere Fahrdrahtführungsrolle in ihrer relativen radialen Höhenlage gegenüber den beiden äußeren Fahrdrahtführungsrollen verstellbar und fixierbar (arretierbar) ist.

Um eine Knickung im Fahrdraht zu beseitigen, wird die Fahrdrahtrichtvorrichtung nach Anspruch 1 mit ihren äußeren Fahrdrahtführungsrollen am Fahrdraht, bei dem es sich z. B. um einen Rillen-Fahrdraht handeln kann, unmittelbar neben der schadhaften Stelle eingehängt. Die mittlere Fahrdrahtführungsrolle ist hierbei von den beiden äußeren Fahrdrahtführungsrollen in radialer Höhe beabstandet. Nach dem Einhängen der Fahrdrahtrichtvorrichtung im Fahrdraht werden die Fahrdrahtführungsrollen entsprechend ihrer radialen Höhenverstellbarkeit so lange aufeinander zu - und damit von oben und/oder von unten in Richtung des Fahrdrahtes - bewegt, bis eine Vorspannung des Fahrdrahtes erreicht ist. Anschließend erfolgt die Fixierung (Arretierung) der verstellbaren Fahrdrahtführungsrolle(n).

Bei einer Ausgestaltung der erfindungsgemäßen Fahrdrahtrichtvorrichtung nach Anspruch 2 wird die radiale Höhenverstellbarkeit dadurch erreicht, daß nach dem Einhängen der Fahrdrahtrichtvorrichtung im Fahrdraht die mittlere Fahrdrahtführungsrolle so lange nach oben, also in Richtung der beiden äußeren Fahrdrahtführungsrollen - und damit in Richtung des Fahrdrahtes - bewegt wird, bis eine Vorspannung des Fahrdrahtes erreicht ist. Anschließend wird die mittlere Fahrdrahtführungsrolle in dieser Position fixiert (arretiert).

Die radiale Höhenverstellung wenigstens einer Fahrdrahtführungsrolle erfolgt vorzugsweise stufenlos. Dadurch ist eine Glättung von Fahrdrähten verschiedener Größen möglich.

Nach dem Fixieren der verstellbaren Fahrdrahtführungsrolle(n) läßt sich die Knickung durch mehrfaches Hin- und Herschieben der erfindungsgemäßen Fahrdrahtrichtvorrichtung über den Knick hinweg problemlos beseitigen, wobei die Fahrdrahtrichtvorrichtung nach Anspruch 1 auch zur Glättung von stärkeren Knickungen geeignet ist, die sich durch die Glättungmethode mit zwei Hartholzstücken und einem Hammer nicht mehr bewerkstelligen läßt. Das Glätten des Fahrdrahtes nimmt nur ca. fünf Minuten in Anspruch und bedeutet damit eine deutliche Zeitersparnis gegenüber dem Austausch des von der Knickung betroffenen Fahrdraht-Teilstückes, der ca. sechs Stunden dauern würde. Darüber hinaus wird durch die Anwendung der erfindungsgemäßen Fahrdrahtrichtvorrichtung das für einen Austausch eines Fahrdraht-Teilstückes benötigte Material eingespart.

Aufgrund der hohen Genauigkeit beim Glätten des Fahrdrahtes mittels der erfindungsgemäßen Fahrdrahtrichtvorrichtung wird die Lebensdauer des Fahrdrahtes gegenüber einer Glättung mit zwei Hartholzstücken und einem Hammer wesentlich verbessert.

Eine besonders exakte Führung der auf dem Fahrdraht aufgesetzten Fahrdrahtrichtvorrichtung wird bei einer Ausgestaltung gemäß Anspruch 3 dadurch erreicht, daß die Fahrdrahtführungsrollen an ihrer Außenumfangsfläche jeweils eine Nut aufweisen.

Die erforderliche fixierbare Verstellbarkeit der mittleren Fahrdrahtführungsrolle erfolgt gemäß einer vorteilhaften Ausgestaltung nach Anspruch 4 durch eine im Grundkörper geführte Spindel, wobei die Spindel bei einer Ausführungsform der Fahrdrahtrichtvorrichtung gemäß Anspruch 5 durch ein Kurbelrad antreibbar ist.

Um ein besonders einfaches Aufsetzen der Fahrdrahtrichtvorrichtung auf den Fahrdraht zu ermöglichen, weist der Grundkörper der Fahrdrahtrichtvorrichtung gemäß Anspruch 6 an seinen beiden Stirnseiten jeweils eine Haltegriff auf. Diese Haltegriffe sind bei der in Anspruch 7 beschriebenen Ausführungsform der erfindungsgemäßen Fahrdrahtrichtvorrichtung als Halteringe ausgebildet. Die Halteringe weisen auf Höhe der beiden äußeren Fahrdrahtführungsrollen jeweils eine Aussparung auf. Bei der Fahrdrahtrichtvorrichtung gemäß Anspruch 7 ist damit auf einfache Weise eine senkrechte Ausrichtung zum Fahrdrahtspiegel möglich.

Zur Gewichtseinsparung kann die Fahrdrahtrichtvorrichtung gemäß Anspruch 8 ausgebildet sein. Bei dieser Ausführungsform ist der Grundkörper als Rahmenkonstruktion ausgeführt.

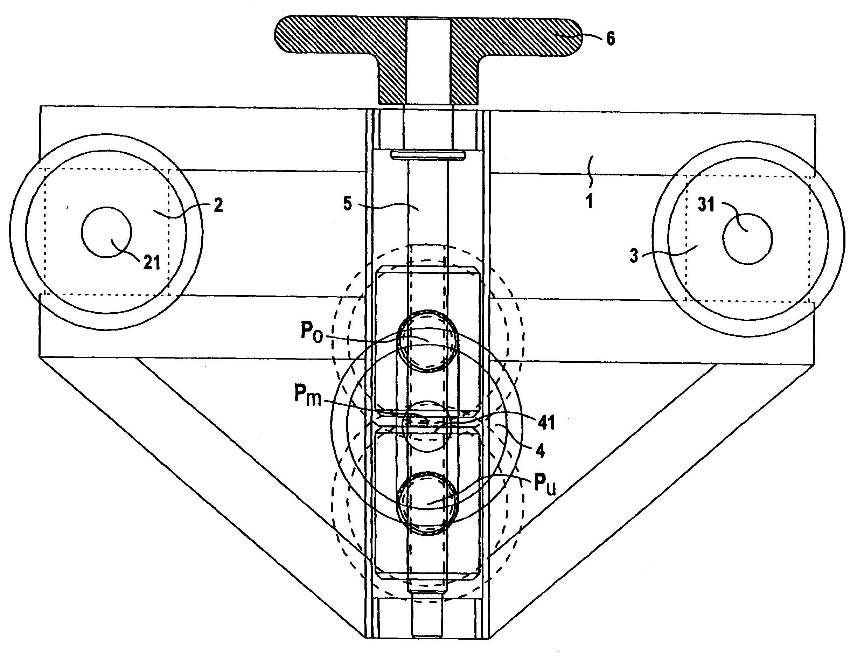

Die Erfindung sowie weitere vorteilhafte Ausgestaltungen, die Gegenstand von weiteren Ansprüchen sind, werden im folgenden anhand eines schematisch dargestellten Ausführungsbeispiels in der Zeichnung näher erläutert.

In der Zeichnung ist mit 1 ein Grundkörper bezeichnet, der gemäß einer bevorzugten Ausgestaltung als Rahmenkonstruktion ausgeführt ist.

An einer seiner beiden Längsseiten sind zwei äußere Fahrdrahtführungsrollen 2 und 3 und eine mittlere Fahrdrahtführungsrolle 4 um ihre Achsen 21 bzw. 31 bzw. 41 drehbar gehalten.

Die beiden äußeren Fahrdrahtführungsrollen 2 und 3 sind radial auf gleicher Höhe angeordnet. Die mittlere Fahrdrahtführungsrolle 4 ist zwischen den beiden äußeren Fahrdrahtführungsrollen 2 und 3 und gegenüber diesen radial tiefer angeordnet. Bei der in der Zeichnung dargestellten Ausführungsform der Fahrdrahtrichtvorrichtung ist die mittlere Fahrdrahtführungsrolle 4 in ihrer relativen radialen Höhenlage gegenüber den beiden äußeren Fahrdrahtführungsrollen 2 und 3 stufenlos verstellbar und in der gewählten Position fixierbar (arretierbar).

Die fixierbare Höhenverstellbarkeit der mittleren Fahrdrahtführungsrolle 4 erfolgt bei dem in der Zeichnung dargestellten Ausführungsbeispiel durch eine im Grundkörper 1 geführte Spindel 5, die durch ein Kurbelrad 6 antreibbar ist.

Durch die Betätigung des Kurbelrades 6 wird die Spindel 5 verdreht und wandert damit entweder nach oben oder nach unten. Durch die Bewegung der Spindel 5 bewegt sich die mittlere Fahrdrahtführungsrolle 4 aus ihrer untersten Position Pᵤ in ihre oberste Position Pₒ. Die mittlere Fahrdrahtführungsrolle 4 ist in ihrer untersten Position Pᵤ und ihrer obersten Position Pₒ gestrichelt dargestellt.

Um mit der in der Zeichnung dargestellten Fahrdrahtrichtvorrichtung eine Knickung im Fahrdraht zu glätten, wird die Fahrdrahtrichtvorrichtung mit den beiden äußeren Fahrdrahtführungsrollen 2 und 3 am Fahrdraht (in der Zeichnung nicht dargestellt) unmittelbar neben der schadhaften Stelle eingehängt. Die mittlere Fahrdrahtführungsrolle 4 befindet sich hierbei in ihrer untersten Position Pᵤ. Nach dem Aufsetzen der Fahrdrahtrichtvorrichtung wird die mittlere Fahrdrahtführungsrolle 4 durch Betätigung des Kurbelrades 6 und damit der Spindel 5 so lange stufenlos in Richtung oberste Position Pₒ bewegt, bis eine Vorspannung des Fahrdrahtes erreicht ist. Dies kann z. B. in der mittleren Position Pₘ der mittleren Fahrdrahtführungsrolle 4 der Fall sein.In ihrer mittleren Position Pₘ wird die mittlere Fahrdrahtführungsrolle 4 dann fixiert (arretiert).

Nach dem Fixieren der mittleren Fahrdrahtführungsrolle 4 läßt sich durch mehrfaches Hin- und Herschieben der Fahrdrahtrichtvorrichtung die Knickung im Fahrdraht auf einfache Weise glätten.

Nach der Glättung muß die mittlere Fahrdrahtführungsrolle 4 lediglich durch Betätigung des Kurbelrades 6 wieder in Richtung unterste Position Pᵤ verstellt werden. Die Fahrdrahtrichtvorrichtung kann dann vom Fahrdraht abgenommen werden.

## Patentansprüche

1. Fahrdrahtrichtvorrichtung, die folgende Merkmale umfaßt:
- Einen Grundkörper (1), an dem an einer seiner beiden Längsseiten wenigstens zwei äußere Fahrdrahtführungsrollen (2, 3) und wenigstens eine mittlere Fahrdrahtführungsrolle (4) um ihre Achsen (21, 31, 41) drehbar gehalten sind, wobei
- die beiden äußeren Fahrdrahtführungsrollen (2, 3) auf radial gleicher Höhe und die mittlere Fahrdrahtführungsrolle (4) zwischen den beiden äußeren Fahrdrahtführungsrollen (2, 3) angeordnet sind, und wobei
- wenigstens eine der Fahrdrahtführungsrollen (2, 3, 4) in ihrer relativen radialen Höhenlage gegenüber den anderen Fahrdrahtführungsrollen (2, 3, 4) verstellbar und fixierbar ist.

2. Fahrdrahtrichtvorrichtung nach Anspruch 1, die folgendes weiteres Merkmal aufweist:
- Die mittlere Fahrdrahtführungsrolle (4) ist gegenüber den beiden äußeren Fahrdrahtführungsrollen (2, 3) radial tiefer angeordnet in ihrer relativen radialen Höhenlage gegenüber den beiden äußeren Fahrdrahtführungsrollen (2, 3) verstellbar und fixierbar.

3. Fahrdrahtvorrichtung nach Anspruch 1, die folgendes weiteres Merkmal aufweist:
- Die Fahrdrahtführungsrollen (2, 3, 4) weisen an ihrer Außenumfangsfläche jeweils eine Nut zur Führung des Fahrdrahtes auf.

4. Fahrdrahtrichtvorrichtung nach Anspruch 2, die folgendes weiteres Merkmal aufweist:
- Die fixierbare Höhenverstellbarkeit der mittleren Fahrdrahtführungsrolle (4) erfolgt durch eine im Grundkörper (1) geführte Spindel (5).

5. Fahrdrahtrichtvorrichtung nach Anspruch 4, die folgendes weiteres Merkmal aufweist:
- Die Spindel (5) ist durch ein Kurbelrad (6) antreibbar.

6. Fahrdrahtrichtvorrichtung nach Anspruch 1, die folgendes weiteres Merkmal aufweist:
- Der Grundkörper (1) weist an seinen beiden Stirnseiten jeweils einen Haltegriff auf.

7. Fahrdrahtrichtvorrichtung nach Anspruch 6, die folgendes weiteres Merkmal aufweist:
- Die Haltegriffe sind als Halteringe ausgebildet, die auf Höhe der beiden äußeren Fahrdrahtführungsrollen (2, 3) jeweils eine Aussparung aufweisen.

8. Fahrdrahtrichtvorrichtung nach Anspruch 1, die folgendes weiteres Merkmal aufweist:
- Der Grundkörper 1 ist als Rahmenkonstruktion ausgeführt.
